**Europäisches Patentamt**

**European Patent Office**

**Office européen des brevets**

(11) Publication number: **0 197 440**
**B1**

(12) **EUROPEAN PATENT SPECIFICATION**

(45) Date of publication of patent specification: **06.06.90**

(21) Application number: **86104197.8**

(22) Date of filing: **26.03.86**

(51) Int. Cl.⁵: **F 16 L 51/02, F 16 L 27/10**

(54) **Flexible element.**

(30) Priority: **01.04.85 CN 85100678**

(43) Date of publication of application:
**15.10.86 Bulletin 86/42**

(45) Publication of the grant of the patent:
**06.06.90 Bulletin 90/23**

(84) Designated Contracting States:
**AT DE FR GB**

(56) References cited:
**DE-C- 83 341**
**DE-C- 801 603**
**DE-C- 842 435**
**FR-A- 746 015**
**FR-A-2 318 379**
**US-A-3 315 704**

(73) Proprietor: **Liang, Wang**
**No. 49 Defengxixiang Quianmen**
**Chongwen District Beijing (CN)**

(72) Inventor: **Liang, Wang**
**No. 49 Defengxixiang Quianmen**
**Chongwen District Beijing (CN)**

(74) Representative: **Kirschner, Klaus Dieter et al**
**Patentanwälte Kirschner & Grosse Forstenrieder**
**Allee 59**
**D-8000 München 71 (DE)**

Courier Press, Leamington Spa, England.

# EP 0 197 440 B1

**Description**

The invention relates to a flexible element according to the opening portion of Claim 1, and, more particularly, this invention refers to a flexible element, which can be used as universal mechanical couplers for sensing, sealing, shock absorber, compensator or expansion joint, being widely applicable to devices in automatic control, instrument, power generating machine, chemical refining of petroleum and nuclear energy.

It is well known that cylindric flexible elements now available composed of a single, double or multiple flexible element and its cylindric segments at both ends, as a universal mechanical coupler commonly adopted, still have several disadvantages. For example, the comparatively small forming radius and unevenly distributed stress are likely to cause local stress concentration, resulting in decreasing the fatigue life. The equivalent longitudinal displacement of the wave is comparatively small. The capability of bearing lateral flexibility is relatively poor, in certain circumstances, it is hard to rely on the elasticity of the flexible element only to compensate the biases in equipment setting up; and it is easy to cause flatting and folding when the angular deflection is relativel large. US—A—2876801. (Metal convolution tubing, patented Mar. 10, 1959), offered a convolutional, flexible tube structure of dual wave crest, but the cross-sectional shape of its trough is different from that of its wave crest and the forming radius of the wave crest is relatively small, the wave trough base is flat; there are connections between straight and arc segments on the cross-section contour, causing uneven distribution of stresses in all parts. US—A—3315704 (flexible bellows, patented Apr. 25, 1987) also offered bellows of dual wave crest but its forming radius of lower wave trough and wave crest are not equal, there are connections between straight and arc segments on the cross-section contour, and the forming radius of lower wave trough is relatively small, resulting in uneven distribution of stresses as well.

From FR—A—2318379 a flexible element is known, where the smallest unit of flexible arcuate segments being a segment having onewave crest and two lower wave troughs. Such arcuate flexible segments are connected to each other one after another, i.e. in the flexible element the forms of the single elements are repeated.

The disadvantage of this form of the segments is that the individual segments—upon bending on the flexible element—very easily tough each other or are subject to excessive stress.

In view of the above mentioned practical problems, it is an object of the present invention to make a suitable and reasonable improvement on the contour of the flexible element, enabling the stress and strain to be evenly distributed in all parts, when loaded.

This object is achieved by a flexible element having the features stated in the characterizing portion of Claim 1.

According to the invention, in the flexible element of (dual) wave crest with concave, the cross-sectional contour of each flexible element is composed of the segmental arcs of lower wave trough, (dual) wave crest and upper wave trough, tangential to each other smoothly, (that is, adding one concave, at the wave crest of the general rippled flexible element to form two wave crests and one wave trough, and thereby it is called dual wave crest and upper wave trough for short). Furthermore, the forming radis of lower wave trough, $R_1$ is equal to that of (dual) wave crest, $R_2$ i.e. $R_1 = R_2$

Based on the forming radius of the upper wave trough $R_3$, the cross-sectional contour of the flexible element of (dual) wave crest with concave can be divided into the following two types:

The first type is that the above mentioned forming radius of lower wave trough $R_1$, forming radius of (dual) wave crest $R_2$ and that of upper wave trough are equal to each other, and all segmental arcs are tangential to each other smoothly, that is

$$R_1 = R_2 = R_3$$

The second type is that the above mentioned forming radius of lower wave trough $R_1$, is equal to that of (dual) wave crest $R_2$, but not to that of upper wave trough, and all segmented arcs are tangential to each other smoothly, that is

$$R_1 = R_2$$

$$R_3 \neq R_2 \quad \text{or} \quad R_3 \neq R_1$$

According to this invention (flexible element of dual wave crest), in every flexible unit, the contour of $R_1 = R_2 = R_3$ (or $R_1 \approx R_2$, $R_3 \neq R_1$) and with wave crest and wave trough composed of equal arcs connecting tangentially, is formed. Therefore, the following advantages can be expected:

1. Because of the elimination of straight segment connection in the contour, it enables the stresses to be evenly distributed in all parts, resulting in prevention from local stresses concentration and increasing service life:

2. The ability of bearing lateral and longitudinal flex is enhanced;

3. It is not easy to produce flatting or folding under relatively large angular deflection;

2

4. It can absorb larger rated displacement with a limited length.

This results in increasing the fatigue life, absorbing larger rated displacement, (especially, lateral flex and angular deflection) which would reduce the longitudinal length; ameliorating the design, lightening the weight, saving the raw materials and reducing the cost.

One way of carrying out the invention is described in detail below with reference to drawings which illustrate only one specific embodiment, in which:

Figure 1 is the cross-sectional contour of one flexible unit of the flexible element of (dual) wave crest of this invention.

Figure 2 is the profile of the same.

Figures 3 and 4 are comparisons of cross sectional contours between the flexible element according to this invention and those of the state of the art.

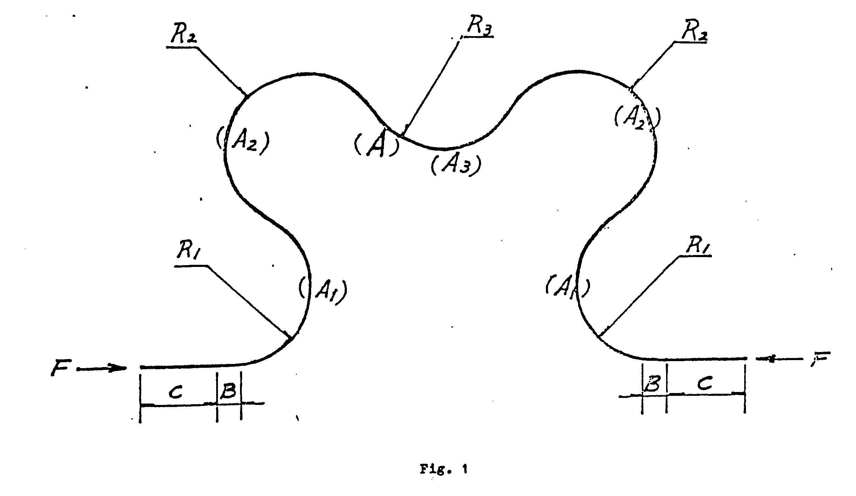

From Figure 1, it can be seen that the cross-sectional contour (A) of a flexible unit of this invention (flexible element of dual wave crest with concave) is composed of two lower wave trough arcs ($A_1$) with radius $R_1$, a (dual) wave crest arc ($A_2$) with radius $R_2$ and an upper wave trough arc ($A_3$) with radius $R_3$, tangential to each other smoothly, where $R_1=R_2=R_3$. Cross-sectional contour (A), together with the continuous curve transition segment (B) and cylindric segment (C) at both ends form a complete continuous flexible element.

Usually, longitudinal load F, identical to the cylindric segment, acts tangentially on and transmits to the flexible unit of the cross-sectional contour of the invention.

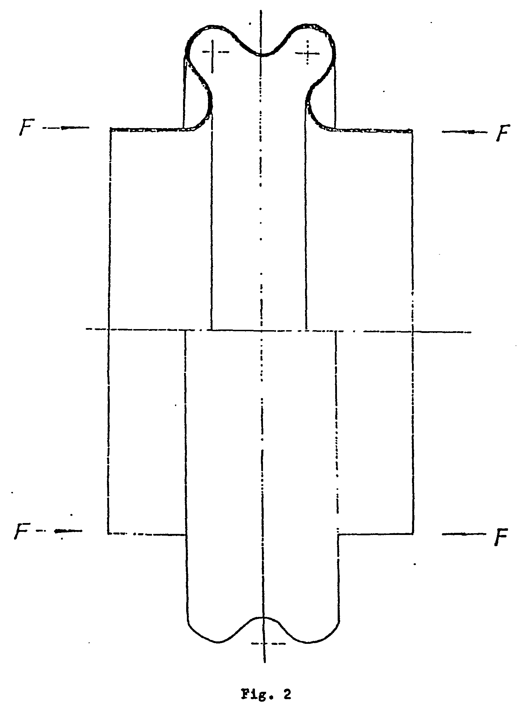

Figure 2 shows the profile of the flexible element of (dual) wave crest with concave of this invention.

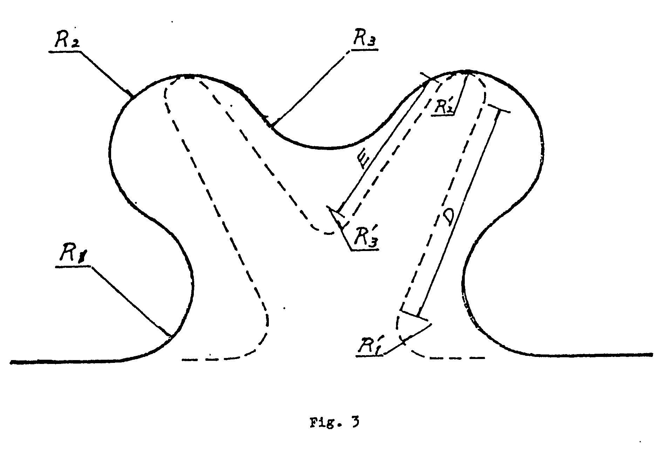

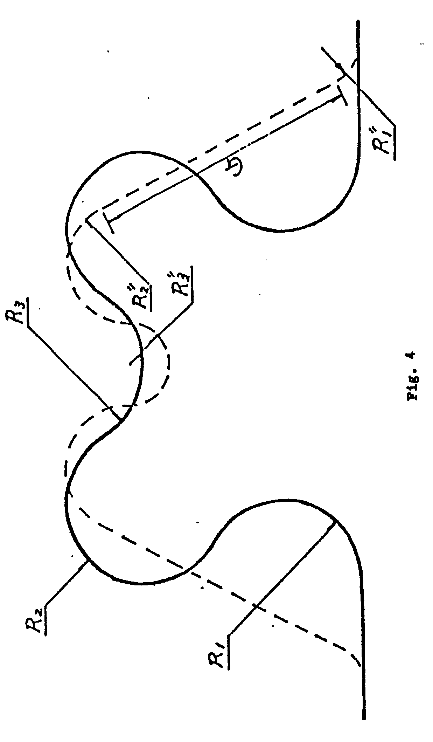

Figure 3 and 4 are given to show clearly the advantages of the cross-sectional contour of the flexible unit of this invention.

Figure 3 is a comparison of cross-sectional contours beween this invention: flexible unit of (dual) wave crest with concave and US—A—2876801: Metal convolution tubing (Solid line for this invention).

Figure 4 is a comparison of cross-sectional contours between this invention: flexible unit of (dual) wave crest with concave and US—A—3315704: Flexible bellows (Solid line for this invention).

From Figures 1, 3 and 4, it can be seen that the major differences of the cross-sectional contours between this invention and the technique now available are as listed in the following table:

| Cross-sectional contour | Contrast of forming radius of lower wave trough and wave crest | Connection between lower wave trough and wave crest | Connection between wave crest and upper wave trough |
|---|---|---|---|
| This invention | $R_1=R_2$ | Tangential connection of equal arcs | Tangential connection of equal arcs |
| US—A—2876801 | $R_1>R_2$, | Connection of straight segment D | Connection of straight segment D |
| US—A—3315704 | $R_1''>R_2''$ | Connection of straight segment G | Tangential connection of arcs |

## Claims

1. A flexible element comprising at least one arcuate flexible segment and one cylindrical segment at both ends of the arcuate flexible segment, the cross-sectional contour of the arcuate flexible segment being composed of segmental arcs of at least one wave crest ($A_2$) and lower wave troughs ($A_1$), the segmental arcs meging tangentially into each other, characterized in that the flexible element comprises at least two arcuate flexible segments and an upper wave trough formed by a concave between double wave crests, and that the forming radius ($R_1$) of the lower wave trough ($A_1$) is equal to the forming radius ($R_2$) of the wave crest.

2. A flexible element as claimed in Claim 1, characterized in that the forming radius ($R_3$) of the upper wave trough ($A_3$) is equal to the forming radius of the lower wave trough ($A_1$) and the wave crests ($A_2$), i.e. $R_1=R_2=R_3$.

3. A flexible element as defined in Claim 1 or 2, characterized in that continuous curve transition segments (B) are arranged between the cylindric segments (C) and the segmental arcs of the lower wave troughs ($A_1$).

# EP 0 197 440 B1

## Patentansprüche

1. Biegsames Element mit wenigstens einem bogenförmigen, biegsamen Abschnitt und einem zylindrischen Abschnitt an beiden Enden des bogenförmigen biegsamen Abschnitts, wobei die Querschnittsform des bogenförmigen biegsamen Abschnitts durch aus wenigstens einem Wellenberg ($A_2$) und unteren Wellentälern ($A_1$) bestehenden Abschnittsbögen gebildet wird, wobei die Abschnittsbögen tangential ineinander übergehen, dadurch gekennzeichnet, daß das biegsame Element wenigstens zwei bogenförmige biegsame Abschnitte sowie ein durch eine Konkave zwischen jeweils zwei Wellenbergen ausgebildetes oberes Wellental umfaßt, und daß der Formradius ($R_1$) des unteren Wellentales ($A_1$) gleich dem Formradius ($R_2$) des Wellenberges ist.

2. Biegsames Element nach Anspruch 1, dadurch gekennzeichnet, daß der Formradius ($R_3$) des oberen Wellentales ($A_3$) gleich dem Formradius des unteren Wellentales ($A_1$) und der Wellenberge ($A_2$) ist, d.h. $R_1=R_2=R_3$.

3. Biegsames Element nach Anspruch 1 oder 2, dadurch gekennzeichnet, daß durchgehende Kurvenübergangabschnitte (B) zwischen den zylindrischen Abschnitten (C) und den Abschnittsbögen der unteren Wellentäler ($A_1$) ausgebildet sind.

## Revendications

1. Elément flexible comprenant au moins un segment flexible arquée et un segment cylindrique aux deux extrémités du segment flexible arqué, le contour en coupe transversale du segment flexible arqué étant constitué d'arcs en segment d'au moins une crête d'onde ($A_2$) et de creux d'onde inférieurs ($A_1$), les arcs en segment convergeant tangentiellement l'un dans l'autre, caractérisé en ce que l'élément flexible comprend au moins deux segments flexibles arqués et un creux d'onde supérieur formé par une concavité entre des doubles crêtes d'onde, et en ce que le rayon formant ($R_1$) du creux d'onde inférieur ($A_1$) est égal au rayon formant ($R_2$) de la crête d'onde.

2. Elément flexible selon la revendication 1, caractérisé en ce que le rayon formant ($R_3$) du creux d'onde supérieur ($A_3$) est égal au rayon formant du creux d'onde inférieur ($A_1$) et aux crêtes d'onde ($A_2$), c'est-à-dire $R_1=R_2=R_3$.

3. Elément flexible selon la revendication 1 ou 2, caractérisé en ce que les segments de transition de courbe continue (B) sont disposés entre les segments cylindriques (C) et les arcs en segment des creux d'onde inférieures ($A_1$).

$R_2$

$R_3$

$R_2$

$(A_2)$

$(A)$

$(A_3)$

$(A_2)$

$R_1$

$(A_1)$

$(A_1)$

$R_1$

$F$

$C$   $B$

$B$   $C$

$F$

Fig. 1

Fig. 2

Fig. 3

Fig. 4

4